# EUROPEAN PATENT APPLICATION

(11) **EP 1 708 148 A2**
(43) Date of publication of application: **04.10.2006**
(21) Application number: 05109629.5
(22) Date of filing: 17.10.2005
(51) Int. Cl.: G07F 7/10

(54) **Method and system for self-administrating 'off-line' monetary transactions**

(30) Priority: 01.04.2005 IT VA20050021
(71) Applicant: BIUCCHI, Sergio, 21049 Tradate (IT); MANTOVANI, Marco, 21049 Tradate (IT)
(72) Inventor: BIUCCHI, Sergio, 21049 Tradate (IT); MANTOVANI, Marco, 21049 Tradate (IT)
(74) Representative: Borsano, Corrado

(57) **Abstract**

The system according to the invention basically comprises:
- one or more smart cards or chip cards called Cash Card, where an integrated circuit chip with a secret code is placed; the Cash Card is available for the public (customers / users) and may be obtained at banks and / or proposed entities;
- one or more smart cards or chip cards called Administrator Cash Card, where an integrated circuit chip with a secret code is placed; The Administrator Cash Card is available for commercial operations and public agencies, and may be obtained at banks and / or proposed entities;
- one or more reading/writing terminals for crediting the Cash Card and the Administrator Cash Card, set up at banks and / or proposed entities;
- one or more "off-line" terminals for reading/debiting the Cash Card and writing/crediting the Administrator Cash Card, placed in any commercial enterprise, private or public agency etc. This kind of devices is not connected to any banking system;
- one or more terminals for Administrator Cash Card debiting or crediting: it is a reading/writing/depositing terminal (to current account, conventional savings account or electronic savings account) set up at banks and / or proposed entities.

## Description

The present invention relates to a method and system for self-administrating "off-line" monetary transactions.

The purpose of the present invention is replacing cash in all small-scale transactions, thus covering a wide sector of transactions at numerous commercial operations (bar, newsstand, tobacconist, bakery, grocer's, greengrocer, video store, music stores, stationers, florists, hair stylists, etc.) and / or public agencies.
Replacing cash in all small-scale transactions is currently served by credit cards or by bank cards. This systems however show a number of drawbacks, like excessive cost and need of a direct electronic connection with the banking system.

Therefore it is the main object of the present invention to provide a method and system for self-administrating "off-line" monetary transactions, which solves the above problems of the known solutions.

The system according to the invention basically comprises:
- one or more smart cards or chip cards called Cash Card, where an integrated circuit chip with a secret code is placed; the Cash Card is available for the public (customers / users) and may be obtained at banks and / or proposed entities;
- one or more smart cards or chip cards called Administrator Cash Card, where an integrated circuit chip with a secret code is placed; The Administrator Cash Card is available for commercial operations and public agencies, and may be obtained at banks and / or proposed entities;
- one or more reading/writing terminals for crediting the Cash Card and the Administrator Cash Card, set up at banks and / or proposed entities;
- one or more "off-line" terminals for reading/debiting the Cash Card and writing/crediting the Administrator Cash Card, placed in any commercial enterprise, private or public agency etc. This kind of devices is not connected to any banking system;
- one or more terminals for Administrator Cash Card debiting or crediting: it is a reading/writing/depositing terminal (to current account, conventional savings account or electronic savings account) set up at banks and / or proposed entities.

These and further objects are achieved by means of a method and system for self-administrating "off-line" monetary transactions, as described in the attached claims, which are considered an integral part of the present description.

By means of the present invention, a number of advantages are achieved.

The Administrator Cash Card differs from all other credit cards because it is not a deferred currencies payment, but an income payment; that means it agrees an immediate credit without expenses on amounts and therefore the availability of the sums present on the Card in real time.
In addition for young people, not to carry cash in their pockets and so run the risk of losing it or having it stolen at school, at the cinema, at the discotheque, etc.; for the majority of adults, relieving them of the problem of small change and cumbersome wallets; for shopping centres and all retailers, it avoids the danger of thefts and robbery.

The invention will become fully clear from the following detailed description, given by way of a mere exemplifying and non limiting example, to be read with reference to the attached drawing figures, wherein:
figures 1 to 5 show embodiments of the "off-line" terminals for readingdebiting the Cash Card and writing/crediting the Administrator Cash Card;
figures 6 and 7 show embodiments of the Cash Card and the Administrator Cash Card;
figure 8 shows a reading/writing terminal for crediting the Cash Card and the Administrator Cash Card;
figure 9 shows a terminal for Administrator Cash Card debiting or crediting;
figures 10 and 11 show flow charts of the operation of the system of the invention.

The same reference numerals and letters in the figures designate the same or functionally equivalent parts.

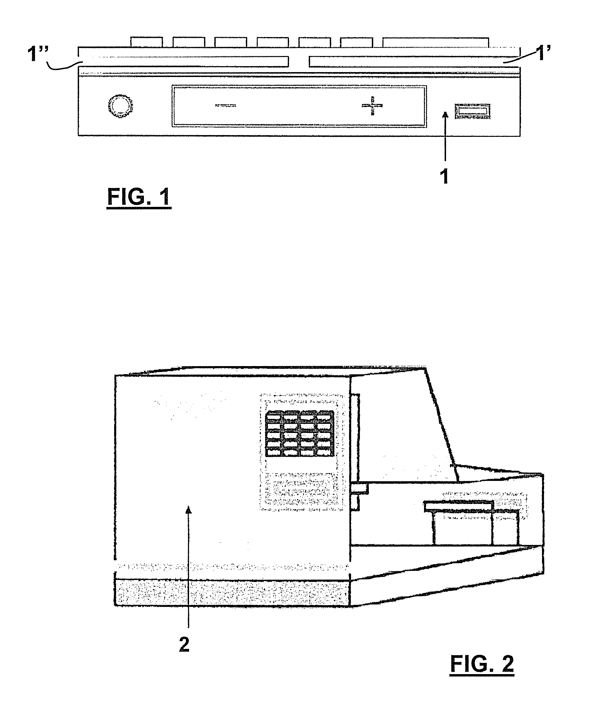

With reference to figures 1 and 2, it is shown an off-line terminal for cash-card reading and unloading, as well as the Administrator Cash Card writing and loading, functional for monetary self-administration transaction system, according to the present invention.

In figure 1 a first embodiment shows a Cash Card and Administrator Cash Card reading/writing device 1 as an electronic/computer device (off-line) shaped by a display and a keyboard and ready to the acceptance of the two cards , which may be located inside the commercial centers and/or public agencies.

In figure 2 a second embodiment shows a Cash Card and Administrator Cash Card off-line reading/writing terminal 2 as a cash register for commercial uses predisposed with electronic/computer device shaped by a display and a keyboard for the two cards acceptance, already integrated on the inside of the novel cash recorders set up at commercial centres and / or public agencies.

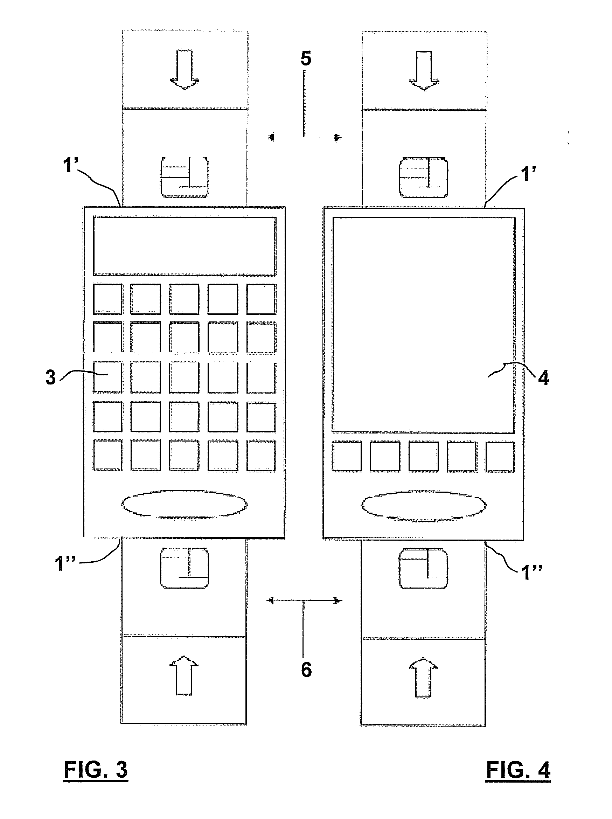

For said first and second embodiments 1 and 2, two kinds of input-output devices are possible.
The first one, in fig. 3, shows an off-line electronic/computer terminal 3 shaped by a display and a keyboard and ready to the acceptance of the two cards.
The second one, in fig. 4, represents an off-line electronic/computer terminal 4 called "Touch Pad" or "Touch Screen" ready for the acceptance of the two cards.

In figures 3 and 4, number 5 represents the Cash Card functional for the computer system of self-administration monetary transaction; number 6 represents the Administrator Cash Card necessary for the computer system of self-administration monetary transaction. The Cash Card 5 and the Administrator Cash Card 6 can be introduced in two suitable slots 1', 1" present in the devices 3 and 4, for read/write operations (see also fig. 1).

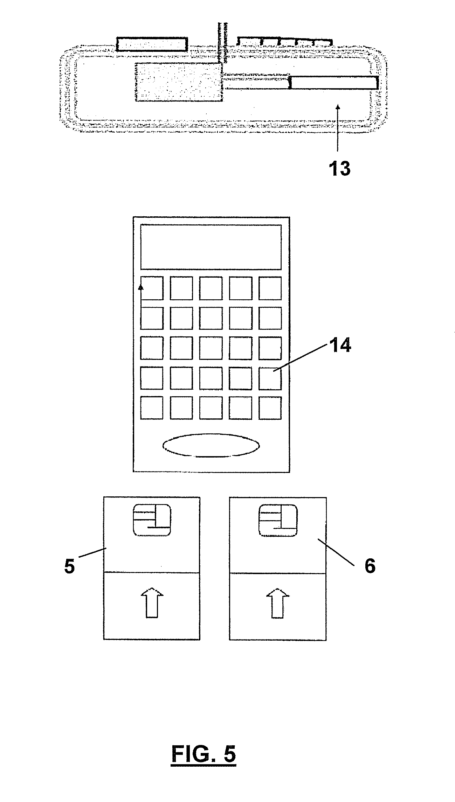

With reference to figure 5, it is shown another embodiment of off-line electronic/computer terminal device 13 for Cash Card and Administrator Cash Card reading/unloading and writing/loading, set up at banks or proposed companies. Number 14 represents an embodiment of the part relating to the display and the keyboard and ready for the acceptance of the Cash Card 5 and the Administrator Cash Card 6.

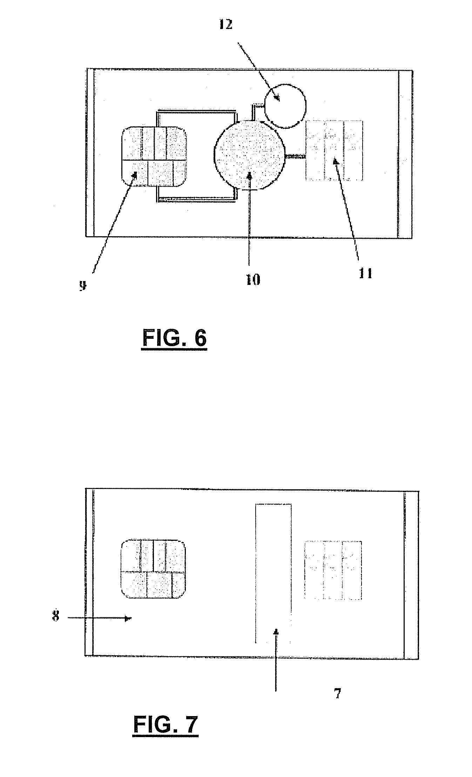

With reference to figures 6 and 7, it is shown a possible construction of the two parts of the cash card (or of the Administrator cash card), which are arranged for union through thermal welding and functional for computer monetary transaction system.

In figure 6 number 8 shows the view of smart card outside part. Number 7 represents the display for balance reading.

Figure 7 shows the view of smart card inside part. Number 9 represents an integrated circuit microchip provided with secret code. Number 10 represents an ultraflat disk drive. Number 11 represents an ultraflat disk drive for fingerprints reading. Number 12 represents an ultraflat battery for the purpose and functioning of the card.

In operation, Cash Card 5 and Administrator Cash Card 6 chip contain various types of information in electronic format protected by sophisticated security mechanisms.

The overall security of the system has been implemented entirely in the Cash Cards and the Administrator Cash Cards, so as to leave all the sensitive information, like personal security codes, amounts of money, etc.... stored in the cards only and not in the other devices of the system. The other parts of the software in the devices carry out other functions, such as transmission of messages with information generated in the smart cards. This way any attempt to violate the security of the system by cracking of the devices does not have any negative effect on the security of the overall system, and it is not possible to get any useful information for analyzing the contents of the smart cards..
The Cash Cards and the Administrator Cash Cards have a security level according to standard FIPS 140-1 Level 2.

Every card has both symmetrical and asymmetrical personalized keys:
the symmetrical keys are 16-bit 3DES keys;
the asymmetrical keys are 1024-bit RSA keys.
A digital signature system is implemented to control the autenticity of the keys. The keys effectively used by tha smart cards during transactions are decided on that moment, upon mutual autenticity recognition.

The communication protocol between the Cash Cards and the Administrator Cash Cards simulates a secure point-to-point communication, the communication link being irrelevant. Security does not depend on the publication of the specifications, instead it depends on the robustness of the keys. After three failed attempts to introduce the PIN code, the card is automatically blocked.

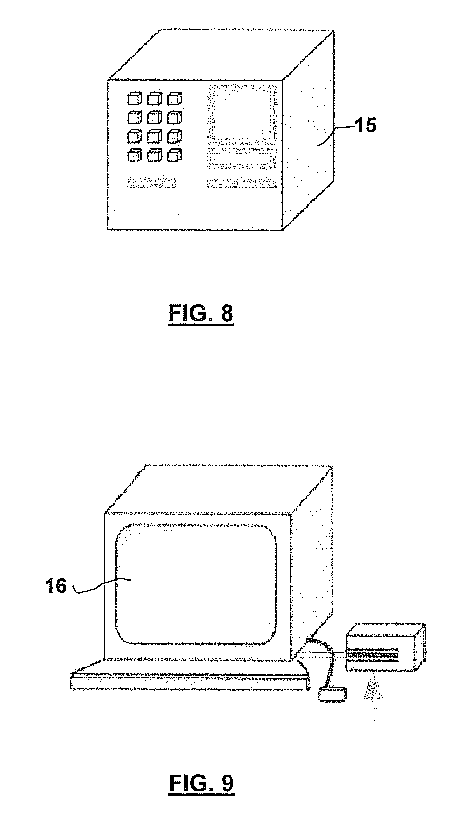

Cash Card microprocessor (with personal password) is much more secure than any magnetic strip card.
The Cash Card is structured as follows:
The Cash Card 5 (which can be sold / distributed to the public by banks and / or other proposed company) offers the possibility of "reading / writing" and has the peculiarity of containing a monetary amount that can be credited or debited.
- Credit balance: the card is inserted into a suitable self-service facility (set up in front of banks and / or proposed businesses, see for example fig. 8); the personal code is entered; the card is loaded by inserting banknotes or coins into the workstation, currently euros or other currency; otherwise the card is loaded with the self-service workstation up by getting funds from own current account and/or electronic savings passbook through a telematic connection with closed-circuit - Intranet (N.B.: it is previewed the loading of Cash Card through an appropriate internet-modem workstation connected to the computer at home and to own bank by the Home Banking and therefore with own current account and/or electronic savings passbook); one is then provided with a print-out receipt showing the balance on the card. (Loading the Cash Card is very simple and does not require any specific technical knowledge). At anytime it is possible a Cash Card balance control by leaning a fingertip against an appropriate ultraflat sensor situated on the Card and by checking on the digital Cash Card display the amount that appears for few seconds or using the appropriate device for fingerprints reading.
- Debit balance: the card is inserted into the slot of the appropriate reading/writing device provided in the business operator's kit together with the Administrator Cash Card., which has already been placed by the business operator inside the device; the "personal code" is entered and, without any telematic connection, the amount indicated on the receipt issued by the cash recorder is debited from the Cash Card and is credited to the administrator Cash Card of the business operator (this also has an identification code) previously inserted into another slot of the same reading/writing device.
The present invention also permits to provide a cash recorder already supplied with a Cash Card reading/debiting device or an Administrator Cash Card writing and crediting device inside.

The Administrator Cash Card 6 provided in the kit to the operator of the commercial activity and / or the public agency (for example, the post office, enel (Italian National Electrical Energy Agency), gas and water, railways and buses, municipal offices, etc.) together with the Cash Card reading/writing device. (N.B. with reference to its use in public agencies, the Administrator Cash Card could prevent any attempt at robbery / theft, because it replace cash).
The particular feature of the administrator Cash Card is that of containing a monetary value that can be credited, debited or "deposited".
- Crediting: the Administrator Cash Card of the operator of the business activity and / or the manager of the public agency is instantaneously credited (using the suitable reading/writing device) with the amount charged by the customer / user holding the Cash Card (see figures 1 and 2).
   In addition, the Administrator Cash Card can normally be "loaded" by the merchant by means of the aforementioned self-service devices capable of Cash Card functions.
- Debiting: the Administrator Cash Card can also be used by the merchant to make their own purchases. In fact, it is enough to insert it into the suitable reader present in any establishment and the amount purchased is debited from the Administrator Cash Card. to be credited in real time on the administrator Cash Card of the other merchant.
- Depositing: the operator of the business activity and / or the manager of the public office can at any time (daily, weekly or monthly) go to a bank and / or an authorized entity for depositing in whole or in part the monetary content of his Administrator Cash Card to a current account, a conventional savings account or an electronic savings account (said latter can also be administered using a suitable Cash Card).
The bank and / or the financial institution must, of course, be equipped with an interactive Cash Card terminal (see figure 9) capable to read the amount contained in the Administrator Cash Card, to debit it (in whole or in part) and to credit it to the account indicated by the holder of the administrator Cash Card.

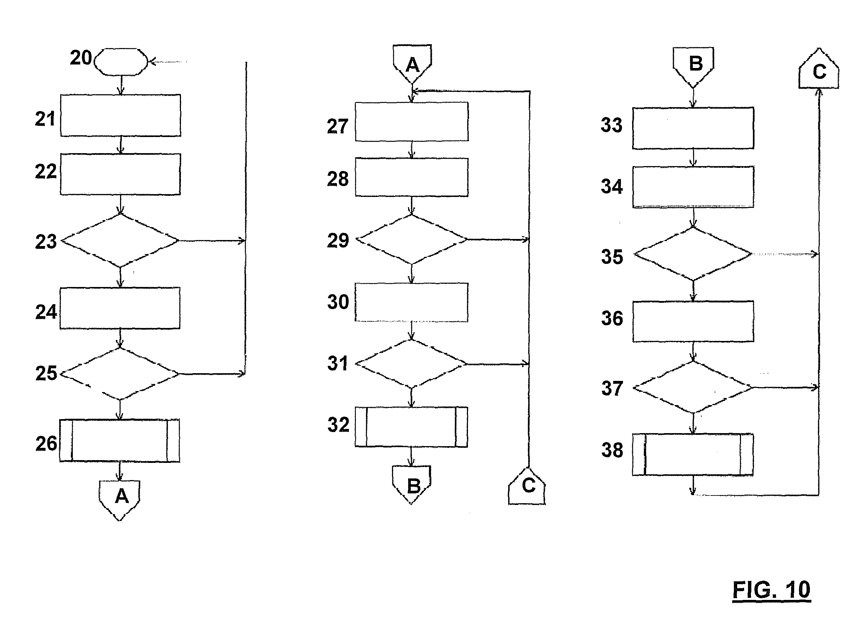

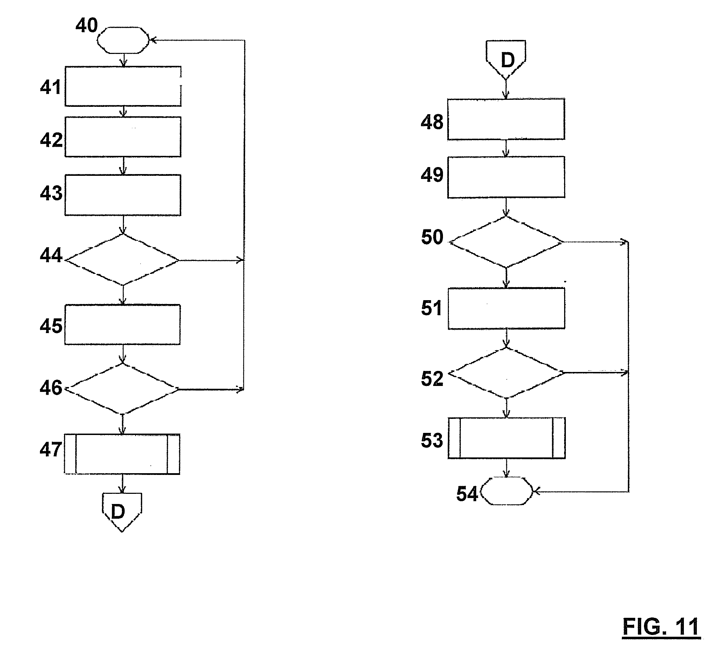

With reference to the annexed flow-charts of figures 10 and 11, two kinds of operations are represented, for the system subject of the invention.

In figure 10 the sequence of steps for operation of the "OFF-LINE" DEVICE (for commercial enterprises, private or public offices etc.) is shown.

At START 20, the Administrator Cash Card is inserted in an off-line terminal like for example that of figures 1 or 2 (step 21), then at 22 the Administrator Cash Card is checked for authenticity
If the Administrator Cash Card is authentic (23), go to 24 (YES), else (NO) go back to START.
In 24 an Administrator Cash Card cryptographic control occurs.
If there is a correct identification (25), then go to 26 (YES), else (NO) go back to START.
At 26 the Administrator Cash Card is qualified.

Then at point A go to 27 where the Cash Card is inserted. Then at 28 the Cash Card is checked for authenticity.
If the Cash Card is authentic (29), then go to 30 (YES), else go back to A.
At 30 a Cash Card cryptographic control occurs.
If there is a correct identification (31), then go to 32 (YES), else go back to A.
At 32 the Cash Card is qualified.

Then at point B go to 33, where a request for amount transfer from the Cash Card to the Administrator Cash Card is input in the keyboard or touch-screen of the off-line terminal.
Then at 34 the terminal checks Cash Card amount availability.
If the amount is available, namely the transaction is allowed (37), then go to 36, else go back to C, namely to A.

At 36 the terminal receives the consent to carry out the transaction from the user.

At 37 the terminal checks if the customer has given the consent. If YES then go to 38, else go back to C and tehn to A.
At 38 the transaction is carried out, namely the request for amount transfer from the Cash Card to the Administrator Cash Card, then return to C, then to A.

In figure 11 the sequence of steps for operation of the "OFF-LINE" DEVICE (for banks or conventioned financial institutions etc.) is shown.

At START 40 a terminal is activated (cash-point, ATM, home banking) (41) and the terminal waits for an input.
At 42 a card is inserted, which may be a Cash Card or an Administrator Cash Card.
At 43 the card is checked for authenticity.
If the card is authentic (44), then go to 45 (YES), else go back to START.
At 45 a card cryptographic control occurs
If there is a correct identification (46), then go to 47 (YES), else go back to START.
At 47 the Cash Card is qualified.
Then at point D go to 48, where there is a remote activation of checking account (or savings passboo,...).
Then at 49 there is a transaction enquiry (deposit, credit, balance,...).
If the transaction is allowed (50), then go to 51, else go to 54 (END).
At 51 the terminal receives the consent to carry out the transaction from the user.
At 52 the machine checks if the customer has given the consent. If YES then go to 53, else go to 54 (END).
At 53 the transaction enquiry is carried out, then the transaction is terminated (54-END).

The present invention can be advantageously implemented through a program for computer comprising program coding means for the implementation of one or more steps of the method, when this program is running on a computer. Therefore, it is understood that the scope of protection is extended to such a program for computer and in addition to a computer readable means having a recorded message therein, said computer readable means comprising program coding means for the implementation of one or more steps of the method, when this program is run on a computer.

Further implementation details will not be described, as the man skilled in the art is able to carry out the invention starting from the teaching of the above description.

In particular it is wise to use the well known Linus Kernel 2.6.11 operating system, and userspace programs like "pcscd".

Many changes, modifications, variations and other uses and applications of the subject invention will become apparent to those skilled in the art after considering the specification and the accompanying drawings which disclose preferred embodiments thereof. All such changes, modifications, variations and other uses and applications which do not depart from the spirit and scope of the invention are deemed to be covered by this invention.

## Claims

1. System for self-administrating monetary transactions, **characterized in that** it comprises:
- one or more smart cards or chip cards called Cash Card (5), where an integrated circuit chip with a secret code is placed, the Cash Card being available for customers / users;
- one or more smart cards or chip cards called Administrator Cash Card (6),
where an integrated circuit chip with a secret code is placed, the Administrator Cash Card being available for commercial operations and public agencies;
- one or more reading/writing devices (15) for crediting the Cash Card and the Administrator Cash Card;
- one or more terminals for Administrator Cash Card debiting or crediting (16), for operations of reading/writing/depositing, i.e. to current account, conventional savings account or electronic savings account;
- one or more "off-line" devices (1, 2) for reading/debiting the Cash Card (5) and writing/crediting the Administrator Cash Card (6), said "off-line" devices (1, 2) not being connected to any banking system, and being provided with means for directly transfering a monetary amount from said Cash Card (5) to said Administrator Cash Card (6).

2. System as in claim 1, **characterized in that** said one or more "off-line" devices (1, 2) for reading/debiting the Cash Card (5) and writing/crediting the Administrator Cash Card (6) being also provided with means for checking personal secret codes in said Cash Card (5) and Administrator Cash Card (6), and enabling said direct transfering of a monetary amount.

3. System as in claim 1, **characterized in that** said Cash Card (5) or said Administrator Cash Card (6) comprise:
- a display for balance reading (7);
- an integrated circuit microchip provided with personal secret code (9);
- an ultraflat disk drive (10);
- an ultraflat disk drive for fingerprints reading (11);
- an ultraflat battery (12) for the purpose and functioning of the card.

4. System as in any of claims from 1 to 3, **characterized in that** said Cash Card (5) or said Administrator Cash Card (6) have a security level according to standard FIPS 140-1 Level 2, have both symmetrical and asymmetrical personalized keys:

5. System as in claim 4, **characterized in that** said symmetrical keys are 16-bit 3DES keys; said asymmetrical keys are 1024-bit RSA keys.

6. Method for self-administrating monetary transactions, said method being used in a system as in any of claims 1 to 5, **characterized in that**, when said Cash Card (5) and Administrator Cash Card (6) are inserted in said one or more "off-line" devices (1, 2), it comprises the steps of:
- checking for authenticity said Administrator Cash Card (6);
- performing a cryptographic control of said Administrator Cash Card (6);
- if the cryptographic control is positive, qualifying the Administrator Cash Card;
- checking for authenticity said Cash Card (5);
- performing a cryptographic control of said Cash Card (5);
- if the cryptographic control is positive, qualifying the Cash Card (5);
- checking Cash Card amount availability, when a request for amount transfer from the Cash Card to the Administrator Cash Card is input;
- if the amount in the Cash Card is available, consenting to carry out the transfer and carrying out the transfer.

7. Method according to claim 6, **characterized in that**, when said Cash Card (5) or Administrator Cash Card (6) are inserted in said one or more terminals for Administrator Cash Card debiting or crediting (16) for operations of reading/writing/depositing, it comprises the steps of:
- checking the card for authenticity;
- performing a cryptographic control of the card;
- qualifying the card;
- remotely activating of checking account (or savings passboo,...);
- allowing a transaction enquiry (deposit, credit, balance,...);
- checking if a consent is given, and then performing the transaction enquiry.

8. Method according to claim 6 or 7, **characterized in that** said steps of checking for authenticity, performing cryptographic control, checking Cash Card amount availability, carrying out the transfer, qualifying the card, performing the transaction enquiry, are implemented in the Cash Cards and the Administrator Cash Cards, so as to leave all the sensitive information, like personal security codes, amounts of money, etc.... stored in the cards only and not in the other devices of the system.

9. Computer program comprising computer program code means adapted to perform all the steps of claim 6, 7 and 8, when said program is run on a computer.

10. A computer readable medium having a program recorded thereon, said computer readable medium comprising computer program code means adapted to perform all the steps of claim 6, 7 and 8, when said program is run on a computer.
